# EUROPÄISCHE PATENTANMELDUNG

(11) **EP 4 191 552 A1**
(43) Veröffentlichungstag der Anmeldung: **07.06.2023**
(21) Anmeldenummer: 21211806.1
(22) Anmeldetag: 01.12.2021
(51) Int. Cl.: G08B 13/183, G01V 8/20

(54) **LICHTVORHANG**

(71) Anmelder: Leuze electronic GmbH + Co. KG, 73277 Owen/Teck (DE)
(72) Erfinder: Hörderich, Johann, 82291 Mammendorf (DE); Rauscher, Thorsten, 81379 München (DE); Park, Daelim, 82024 Taufkirchen (DE); Pychal, Martin, 85221 Dachau (DE); Sillge, Ray, 80995 München (DE); Feller, Bernhard, 86316 Friedberg (DE)
(74) Vertreter: Ruckh, Rainer Gerhard

(57) **Zusammenfassung**

Die Erfindung betrifft einen Lichtvorhang (1) zur Erfassung von Objekten in einem Überwachungsbereich mit einer Sendereinheit umfassend eine Anordnung von Lichtstrahlen (3) emittierenden Sendern (4) und mit einer Empfängereinheit umfassend eine Anordnung von Lichtstrahlen (3) empfangenden Empfängern (6). Jeweils ein Sender (4) bildet mit einem zugeordneten Empfänger (6) ein Sender-Empfänger-Paar. Bei freiem Überwachungsbereich treffen die Lichtstrahlen (3) jedes Senders (4) ungehindert auf den zugeordneten Empfänger (6). Bei einem Objekteingriff im Überwachungsbereich sind die Lichtstrahlen (3) wenigstens eines Senders (4) unterbrochen. Weiterhin ist eine Auswerteeinheit (9) vorgesehen, in welcher in Abhängigkeit von Empfangssignalen (6a) der Empfänger (6) ein Objektfeststellungssignal generiert wird. Der Lichtstrahl (3) wenigstens eines Senders (4) bildet einen Informationsstrahl, mittels dessen wenigstens eine Information in Form einer Kodierung an den zugeordneten Empfänger (6) übertragen wird, wodurch eine Funktionsänderung in der Empfängereinheit bewirkt wird.

## Beschreibung

Die Erfindung betrifft einen Lichtvorhang.

Derartige Lichtvorhänge dienen zur Erfassung von Objekten in einem Überwachungsbereich. Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern. Weiterhin ist eine Auswerteeinheit vorgesehen, in welcher in Abhängigkeit von Empfangssignalen der Empfänger ein Objektfeststellungssignal generiert. Dieses Objektfeststellungssignal ist vorzugsweise ein binäres Schaltsignal dessen Schaltzustände angeben, ob sich ein Objekt im Überwachungsbereich befindet oder nicht.

Typischerweise emittieren die einzelnen Sender Lichtstrahlen in Form von Lichtimpulsen. Die Lichtimpulse können Kodierungen ausbilden, anhand der die Lichtstrahlen der einzelnen Sender unterscheidbar sind.

Dies kann dazu genutzt werden, dass anhand der Lichtstrahlen eines Senders eine optische Synchronisation des Lichtvorhangs erfolgt, so dass dann Sender-Empfänger-Paare des Lichtvorhangs zyklisch einzeln nacheinander aktiviert werden um die Objekterfassung im Überwachungsbereich durchzuführen.

Der Erfindung liegt die Aufgabe zugrunde einen Lichtvorhang mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich mit einer Sendereinheit umfassend eine Anordnung von Lichtstrahlen emittierenden Sendern und mit einer Empfängereinheit umfassend eine Anordnung von Lichtstrahlen empfangenden Empfängern. Jeweils ein Sender bildet mit einem zugeordneten Empfänger ein Sender-Empfänger-Paar. Bei freiem Überwachungsbereich treffen die Lichtstrahlen jedes Senders ungehindert auf den zugeordneten Empfänger. Bei einem Objekteingriff im Überwachungsbereich sind die Lichtstrahlen wenigstens eines Senders unterbrochen. Weiterhin ist eine Auswerteeinheit vorgesehen, in welcher in Abhängigkeit von Empfangssignalen der Empfänger ein Objektfeststellungssignal generiert wird. Der Lichtstrahl wenigstens eines Senders bildet einen Informationsstrahl, mittels dessen wenigstens eine Information in Form einer Kodierung einen Informationsstrahl bildenden Lichtstrahl an den zugeordneten Empfänger übertragen, wodurch eine Funktionsänderung in der Empfängereinheit bewirkt wird.

Der erfindungsgemäße Lichtvorhang wird in bekannter Weise zur Erfassung von Objekten in einem Überwachungsbereich eingesetzt. Die Sendereinheit und die Empfängereinheit sind an gegenüberliegenden Rändern des Überwachungsbereichs angeordnet. Die Sender und Empfänger des Lichtvorhangs bilden dabei zusammenarbeitende Sender-Empfänger-Paare derart, dass bei freiem Überwachungsbereich die Lichtstrahlen des Senders eines Sender-Empfänger-Paars ungehindert auf den Empfänger dieses Sender-Empfänger-Paars treffen. Bei einem Eingriff eines Objektes in dem Überwachungsbereich unterbricht dieses den Strahlengang zumindest einer der Lichtstrahlen wodurch das Objekt erkannt wird. Hierzu wird in der Auswerteeinheit des Lichtvorhangs abhängig von den Empfangssignalen der Empfänger ein Objektfeststellungssignal generiert.

Die Anzahl der Sender-Empfänger-Paare des Lichtvorhangs kann je nach Anwendungsfall unterschiedlich sein. Im einfachsten Fall ist nur ein Sender-Empfänger-Paar vorgesehen. Dann bildet der Lichtvorhang eine Lichtschranke.

Erfindungsgemäß werden die Lichtstrahlen wenigstens eines der Sender als Informationsstrahlen genutzt, die wenigstens eine Information an den zugeordneten Empfänger übertragen. Durch diese zusätzliche Informationsübertragung ist die Funktionalität des erfindungsgemäßen Lichtvorhangs erheblich erweitert.

Generell wird durch die wenigstens eine Information, die mit dem wenigstens einen Informationsstrahl übertragen wird, eine Funktionsänderung in der Empfängereinheit bewirkt. Diese Funktionsänderung erfolgt rein auf optischem Weg, so dass an der Empfängereinheit hierfür keine hardwaremäßigen Vorrichtungen zur Funktionseinstellung vorgesehen sein müssen, wodurch der konstruktive Aufwand des erfindungsgemäßen Lichtvorhangs geringgehalten werden kann.

Gemäß einer vorteilhafter Ausführungsform der Erfindung wird mittels der wenigstens einen Information, die über einen Informationsstrahl an einen Empfänger gesendet wird, eine Betriebsart in der Empfängereinheit übernommen.

Dabei weist diese Sendereinheit Einstellmittel auf, durch deren Betätigung eine Betriebsart vorgebbar ist, und dass die vorgegebene Betriebsart über den Informationsstrahl an die Empfängereinheit übermittelt wird.

Damit muss generell eine Betriebsart oder eine sonstige Kenngröße, wie z. B. ein Parameter für den Lichtvorhang, nur an der Sendereinheit eingegeben werden, wobei diese dann auf optischem Weg an die Empfängereinheit übermittelt und dort übernommen wird. Somit brauchen nur an der Sendereinheit, nicht aber an der Empfängereinheit, Einstellmittel vorgesehen sein, wodurch der konstruktive Aufwand des Lichtvorhangs reduziert werden kann, insbesondere auch der Verkabelungsaufwand für den Lichtvorhang.

Vorteilhaft ist mittels der Einstellmittel eine Verpolung der Betriebsspannung des Lichtvorhangs durchführbar oder die Beschaltung eines Anschlusssteckers zum Beispiel mit einer Brücke änderbar.

Alternativ ist das Einstellmittel von einem externen Gerät gebildet, das über eine drahtgebundene oder drahtlose Schnittstelle an den Lichtvorhang anschließbar ist. Die drahtlose Schnittstelle kann von einer Funk- oder Infrarot-Verbindung gebildet sein.

Das externe Gerät kann beispielsweise ein Personalcomputer oder ein mobiles Eingabegerät (z.B. Tablet, Smartphone) sein.

Im einfachsten Fall ist eine Betriebsartenstellung nur einmalig nach Einschalten des Lichtvorhangs möglich. Vorteilhaft kann die Betriebsart auch während des Betriebs des Lichtvorhangs geändert werden.

Die Einstellung der Betriebsart kann durch im Lichtvorhang eingegebene bzw. gespeicherte Restriktionen begrenzt sein. Beispielsweise kann die Anzahl von Betriebsarteneinstellungen begrenzt sein. Auch kann eine Restriktion darauf definiert sein, dass aus einer Betriebsart nur in eine bestimmte andere Betriebsart umgeschaltet werden kann.

Prinzipiell kann auf Einstellmittel an der Empfängereinheit völlig verzichtet werden. Es ist jedoch auch möglich, an der Empfängereinheit selbst Einstellmittel vorzusehen, mit denen vorteilhaft nur bestimmte Betriebsarten eingestellt werden. Auf optischem Weg werden dann alle anderen Betriebsarten eingestellt. Weiterhin ist es auch möglich, alle Betriebsarten über die Sendereinheit auf optischem Weg einzustellen.

Vorteilhaft kann als Betriebsart eine erhöhte Unempfindlichkeit gegen Störungen vorgebbar sein.

Die Unempfindlichkeit des Lichtvorhangs gegen Störeinflüsse, wie Störlichteinstrahlungen, kann durch geeignete Auswertealgorithmen verbessert werden. Beispielsweise können zur Generierung des Objektfeststellungssignals nicht nur die Empfangssignale der Empfänger während eines Zyklus (Scans), sondern während mehrerer Zyklen der Aktivierungen der Sender-Empfänger-Paare des Lichtvorhangs herangezogen werden.

Weiterhin kann ein Objektfeststellungssignal nur dann generiert werden, wenn es sich über mehrere Zyklen nicht zu schnell bewegt. Damit können Störeinflüsse durch Störobjekte, die schnell durch den Überwachungsbereich fliegen, wie z. B. Späne, eliminiert werden.

Weiterhin kann als Kriterium für eine Objekterkennung gefordert werden, dass das detektierte Objekt eine Mindestgröße aufweist, so dass bei einer Objektdetektion die Lichtstrahlen mehrerer benachbarter Sender-Empfänger-Paare gleichzeitig unterbrochen sein müssen.

Auch ist es möglich, die Verstärkungen der Empfangssignale in geeigneter Weise umzustellen.

Weiterhin ist als Betriebsart eine Logik-Funktion vorgebbar.

Beispiele für derartige Logikfunktionen sind Muting- oder Blanking-Funktionen, die insbesondere für Lichtvorhänge in Form von Sicherheitssensoren vorgegeben werden. Derartige Sicherheitssensoren werden im Bereich der Sicherheitstechnik eingesetzt, insbesondere im Bereich des Personenschutzes. Mit dem Lichtvorhang wird dann eine Anlage überwacht, von der Gefahren ausgehen können. In diesem Fall generiert der Lichtvorhang als Objektfeststellungssignal ein binäres Schaltsignal, dessen Schaltzustände angeben, ob sich ein Objekt im Überwachungsbereich befindet oder nicht. Wird mit dem Lichtvorhang ein Objekt im Überwachungsbereich erfasst, wird durch das entsprechende Schaltsignal eine Sicherheitsfunktion ausgelöst, insbesondere die Anlage stillgesetzt. Bei einem Muting wird der Lichtvorhang zumindest partiell überbrückt (gemutet), so dass ein in dem gemuteten Bereich des Lichtvorhangs nicht zur Auslösung der Sicherheitsfunktion führt.

Ein Blanking erfolgt, wenn bestimmte Strahlachsen, durch stationäre Gegenstände dauerhaft unterbrochen sind, wobei eine Strahlachse von einem Sender-Empfänger-Paar des Lichtvorhangs gebildet ist. Beim Blanking wird für die Strahlachsen eine Erwartungshaltung derart vorgesehen, dass entsprechend der stationären Gegenstände im Überwachungsbereich vorgesehen wird, welche Strahlachsen unterbrochen sind und welche nicht. Die Einhaltung der Erwartungshaltung wird dann im Betrieb des Lichtvorhangs überwacht.

Weiterhin ist als Betriebsart eine Ein-/Ausgabe-Funktion vorgebbar.

Die Ein-/Ausgabe-Funktionen können von bestimmten Belegungen bzw. Konfigurationen von Ein- und/oder Ausgängen des Lichtvorhangs gebildet sein. Beispielsweise kann ein Eingang an der Sendereinheit und der Empfängereinheit des Lichtvorhangs zum Anschluss einer Restart-Taste vorgesehen sein, die zum Wiederanlauf des Lichtvorhangs nach Auftreten einer Störung dient.

Schließlich kann eine Betriebsart ein Gerätezustand oder ein Fehlerzustand sein.

Ein derartiger, in der Sendereinheit vorhandener Geräte- oder Fehlerzustand, wird mit wenigstens einem Informationsstrahl an die Empfängereinheit übermittelt und dort mit geeigneten Anzeigemitteln angezeigt.

Generell wird die mit einem Informationsstrahl übertragene Information in Form einer Kodierung in der Empfängereinheit, insbesondere in deren Auswerteeinheit, einer Gültigkeitsprüfung unterzogen.

Diese Gültigkeitsprüfung erfolgt insbesondere durch einen Vergleich der übertragenen Kodierung mit vorgegebenen Sollwerten.

Um eine sichere optische Übertragung der Kodierung zu gewährleisten, kann diese mit einer Prüfsumme abgesichert sein, die ebenfalls in der Empfängereinheit auf Gültigkeit überprüft wird.

Tritt ein Übertragungsfehler auf, wechselt die Empfängereinheit in den sicheren Zustand, d. h. der Lichtvorhang wird aus Sicherheitsgründen abgeschaltet.

Alternativ kann ein Restart des Lichtvorhangs durchgeführt werden, nachdem bei einem Übertragungsfehler die Empfängereinheit in den sicheren Zustand übergegangen ist.

Der Restart kann als automatisierter Auto-Restart ausgebildet sein oder von einem Benutzer initiiert werden.

Auf den Restart startet die Empfängereinheit neu, die Empfänger lernen Sendesignale, d. h. Lichtstrahlen der zugeordneten Sender ein, die anhand von Kodierungen eindeutig in der Empfängereinheit erkannt wurden.

Um die Kodierungen identifizieren zu können, werden diese in einen Einlernvorgang in der Empfängereinheit eingelernt.

Der Lichtvorhang schaltet dann seinen Ausgang, insbesondere seinen Sicherheitsausgang, zur Ausgabe der Objektfeststellungssignale nur dann ein, wenn in der Eingabeeinheit die Kodierungen der Lichtstrahlen fehlerfrei erkannt worden sind.

Gemäß einer vorteilhaften Ausführungsform ist der Sender, über dessen Lichtstrahl die Information übertragen wird, frei wählbar.

Damit kann in der Sendereinheit bedarfsweise und situationsbedingt frei vorgegeben werden, welcher Sender zur Informationsübertragung genutzt werden soll. Dabei ist es generell möglich, dass mehrere Sender, über deren Lichtstrahlen Informationen übertragen werden, vorgesehen sind.

Weiterhin ist es möglich, dass mit den Lichtstrahlen eines Senders mehrere Informationen übertragen werden. Damit können unterschiedliche Funktionen in der Empfängereinheit aktiviert oder konfiguriert werden.

Gemäß einer vorteilhaften Ausgestaltung werden die Sender-Empfänger-Paare zyklisch einzeln nacheinander aktiviert.

Dementsprechend werden Informationen über Lichtstrahlen zyklisch übertragen.

Dann ist es möglich eine oder mehrere Informationen innerhalb mehrerer aufeinanderfolgenden Zyklen zu übertragen.

Gemäß einer weiteren vorteilhaften Ausgestaltung sind dessen Sender und Empfänger optisch synchronisiert.

Zweckmäßig erfolgt die optische Synchronisation anhand eines Synchronisationsstrahls, wobei der Synchronisationsstrahl von einem Lichtstrahl gebildet ist.

Vorteilhaft sind mehrere Synchronisationsstrahlen vorhanden, die jeweils von einem Lichtstrahl gebildet sind, wobei wahlweise einer der Synchronisationsstrahlen zur Synchronisation der Sender und Empfänger herangezogen wird.

In diesem Fall können mittels eines Synchronisationsstrahls auch Informationen übertragen werden.

Der Synchronisationsstrahl erfüllt somit eine Doppelfunktion, in dem er auch als Informationsstrahl genutzt wird.

Gemäß einer vorteilhaften Ausführungsform der Erfindung emittieren dessen Sender Lichtstrahlen in Form von Lichtimpulsen.

In diesem Fall wird eine Information mit dem Lichtstrahl dadurch übertragen, dass die Anzahl von Lichtimpulsen und/oder eine Pulsdauer eines Lichtimpulses und/oder eine Pause zwischen Lichtimpulsen variiert wird.

Gemäß einer zweckmäßigen Ausgestaltung bildet ein Lichtstrahl einen Referenzstrahl. Auf den Referenzstrahl folgt ein Informationsstrahl, wobei der Informationsstrahl auf den Referenzstrahl referenziert ist.

Die Lichtimpulse des Referenzstrahls bilden Referenzen für die mit dem folgenden Informationsstrahl übertragenen Lichtimpulse, wobei dann vorteilhaft die Information über einen Informationsstrahl dadurch übertragen wird, dass Sendezeitpunkte von Lichtimpulsen moduliert sind.

Die zeitliche Dauer der Aktivierung eines Lichtstrahls, die Anzahl der Pulse eines Lichtstrahls, sowie die zeitlichen Abstände der Pulse werden zusammenfassend als Übertragungskanal bezeichnet. Typischerweise kann der Anwender eines Lichtvorhangs zwischen mehreren vom Hersteller implementierten Übertragungskanälen auswählen. In einer weiteren Ausprägung findet die Einstellung des Übertragungskanals nur im Sender statt. Der gewählte Übertragungskanal ist hierbei die zu übertragende Information. Der zugeordnete Empfänger kann den im Sender eingestellten Übertragungskanal anhand ihm bekannter Kriterien, z.B. eindeutiger Aufbau des Synchronisationsstrahls erkennen und übernehmen.

Gemäß einer vorteilhaften Weiterbildung sendet ein Sender einen Informationsstrahl aus, bei welchem eine Einteilung in mehrere Zeitzonen, innerhalb der Lichtimpulse emittiert werden, vorliegt.

Ist beispielsweise der Informationsstrahl, der innerhalb eines Zyklus von einem der Sender emittiert in zwei Zeitzonen unterteilt, so kann durch Aussenden von Lichtimpulsen in den beiden Zeitzonen ein binäres System kodiert werden. Ist der Lichtstrahl in z. B. zehn Zeitzonen unterteilt, entsteht ein Dezimalsystem.

Gemäß einer weiteren vorteilhaften Ausgestaltung sendet ein Sender einen Informationsstrahl aus, der eine Kodierung einer Information in Form einer Folge von Lichtimpulsen aussendet, welche eine zeitliche Lücke aufweist, die an den Sendebetrieb eines weiteren Lichtvorhangs angepasst ist.

Die Lücken sind vorzugsweise so dimensioniert, dass eine Störeinstrahlung durch einen benachbarten zweiten Lichtvorhang die über den Informationsstrahl übertragenen Informationen nicht verfälscht.

Weiter vorteilhaft wird mittels eines Informationsstrahls eine Information in Form einer Kodierung übertragen. Zusätzlich wird eine andere Information in unkodierter Form oder mit einer anderen Kodierung übertragen.

Die andere Information kann eine kurze Signalkodierung oder sogar unkodiert sein, wodurch kurze Reaktionszeiten erhalten werden.

Die Erfindung wird im Folgenden anhand der Zeichnungen erläutert. Es zeigen:
- Figur 1:: Ausführungsbeispiel des erfindungsgemäßen Lichtvorhangs.
- Figur 2:: Schematische Darstellung von Lichtimpuls-Folgen für den Lichtvorhang gemäß Figur 1.
- Figur 3:: Erstes Beispiel zeitlicher Verläufe von Lichtimpulsen von Referenzstrahlen und Informationsstrahlen für den Lichtvorhang gemäß Figur 1 und einen Zyklus des Lichtvorhangs.
- Figur 4:: Zweites Beispiel zeitlicher Verläufe von Lichtimpulsen von Referenzstrahlen und Informationsstrahlen für den Lichtvorhang gemäß Figur 1 für einen Zyklus des Lichtvorhangs.
- Figur 5:: Beispiel zeitlicher Verläufe von Lichtimpulsen von Referenzstrahlen und Informationsstrahlen für den Lichtvorhang gemäß Figur 1 für zwei aufeinanderfolgende Zyklen des Lichtvorhangs.
- Figur 6:: Kodierung von zwei Informationszuständen für einen Informationsstrahl a) des Lichtvorhangs gemäß Figur 1 b) benachbarten Lichtvorhang

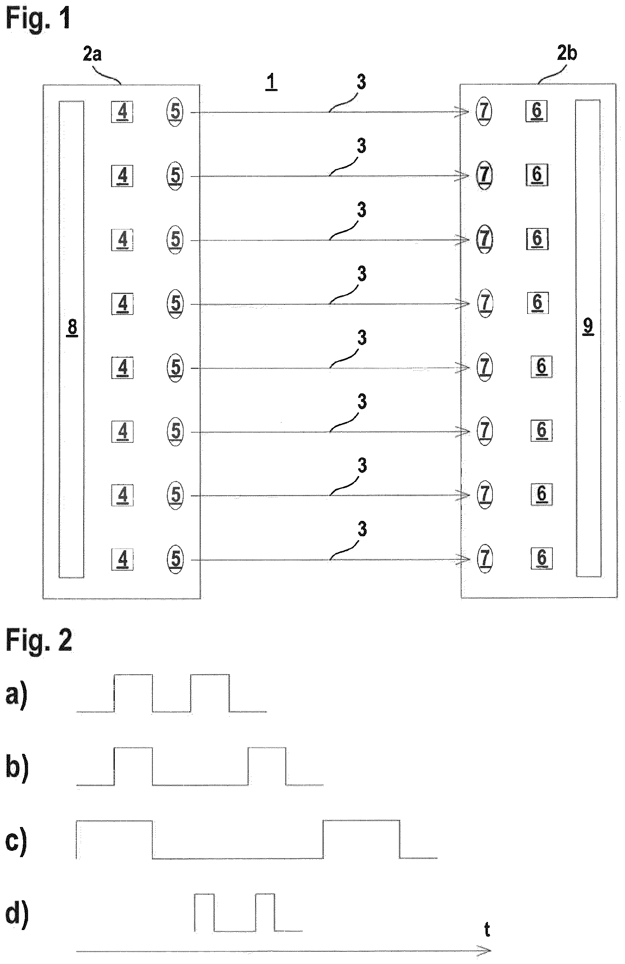

Figur 1 zeigt schematisch den Aufbau eines Ausführungsbeispiels des erfindungsgemäßen Lichtvorhangs 1 zur Erfassung von Objekten innerhalb eines Überwachungsbereichs.

Der Lichtvorhang 1 weist eine Sendereinheit mit einem Gehäuse 2a mit einer Reihenanordnung von Lichtstrahlen 3 emittierenden Sendern 4 und diesen zugeordneten Sendeoptiken 5 auf. Weiterhin weist der Lichtvorhang 1 eine Empfängereinheit mit einem zweiten Gehäuse 2b mit einer Reihenanordnung von Lichtstrahlen 3 empfangenden Empfängern 6 auf, welchen jeweils eine Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 zusammen mit dem Empfänger 6 eine Strahlachse bilden. Im vorliegenden Fall sind acht Strahlachsen vorgesehen. Natürlich kann der Lichtvorhang 1 auch eine andere Zahl von Strahlachsen aufweisen.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale 6a zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet.

Die Erfassung von Objekten erfolgt in einem Arbeitsbetrieb des Lichtvorhangs 1. Die Sender 4 emittieren dabei Lichtstrahlen 3 in Form von Lichtimpulsen.

Die Sender 4 werden mittels einer in der Sendersteuerung 8 angeordneten Schiebekette zyklisch einzeln nacheinander aktiviert. Entsprechend werden die Empfänger 6 mittels einer Schiebekette zyklisch einzeln nacheinander aktiviert. Der Lichtvorhang 1 ist auf optischem Weg synchronisiert, so dass dessen Sender-Empfänger-Paar zyklisch einzeln nacheinander aktiviert sind, d. h. innerhalb eines Zyklus (Scans) wird jedes Sender-Empfänger-Paar einmal aktiviert.

In Figur 2 sind verschiedene Pulscodierungen, die während eines Zyklus oder von unterschiedlichen Geräten ausgesendet werden, und demenstprechend emittierte Lichtimpulse (bezeichnet mit a-d) dargestellt.

Generell kann der Lichtstrahl 3 einer oder mehrerer Strahlachsen als Informationsstrahl genutzt werden, um wenigstens eine Information von der Sendereinheit an die Empfängereinheit zu übertragen, wodurch eine Funktionsänderung in der Empfängereinheit bewirkt wird.

Dabei wird, wie Figur 2 zeigt, eine Information mit dem Lichtstrahl 3 dadurch übertragen, dass die Anzahl von Lichtimpulsen und/oder eine Pulsdauer eines Lichtimpulses und/oder eine Pause zwischen Lichtimpulsen variiert wird.

Die Pulsfolgen der Strahlachsen des Lichtvorhangs 1 (in Figur 2 mit a-c bezeichnet) unterscheiden sich von den Pulsfolgen eines benachbarten Lichtvorhangs 1 (in Figur 2 mit d bezeichnet) derart, dass bei einer Störeinstrahlung des benachbarten Lichtvorhangs 1 in den Lichtvorhang 1 keine Zerstörung der zu übertragenden Informationen erfolgt.

Die Lichtimpulse, die von den Sendern 4 an die Empfänger 6 gesendet werden, werden in der Empfängereinheit einer Gültigkeitsprüfung unterzogen, vorteilhaft durch Vergleich mit gespeicherten Sollwerten. Eine Funktionsänderung der Empfängereinheit wird nur freigegeben, wenn die gesendeten Lichtimpulse eines Informationsstrahls als gültig erkannt werden.

Über die Sendesteuerung 8 wird vorgegeben, welcher oder welche Sender 4 zur Informationsübertragung genutzt werden.

Weiterhin kann die optische Synchronisation anhand eines Synchronisationsstrahls erfolgen, wobei der Synchronisationsstrahl von einem Lichtstrahl 3 gebildet ist.

Generell können mehrere Synchronisationsstrahlen vorhanden sein, die jeweils von mehreren der Lichtstrahlen 3 gebildet sind. Wahlweise wird einer der Synchronisationsstrahlen zur Synchronisation der Sender 4 und Empfänger 6 herangezogen.

Auch mittels der Synchronisationsstrahlen können Informationen übertragen werden.

Im vorliegenden Fall wird mittels der wenigstens einen Information, die über einen Informationsstrahl an einen Empfänger 6 gesendet wird, eine Betriebsart in der Empfängereinheit übernommen.

Dabei weist diese Sendereinheit Einstellmittel auf, durch deren Betätigung eine Betriebsart vorgebbar ist. Die vorgegebene Betriebsart über den Informationsstrahl wird an die Empfängereinheit übermittelt.

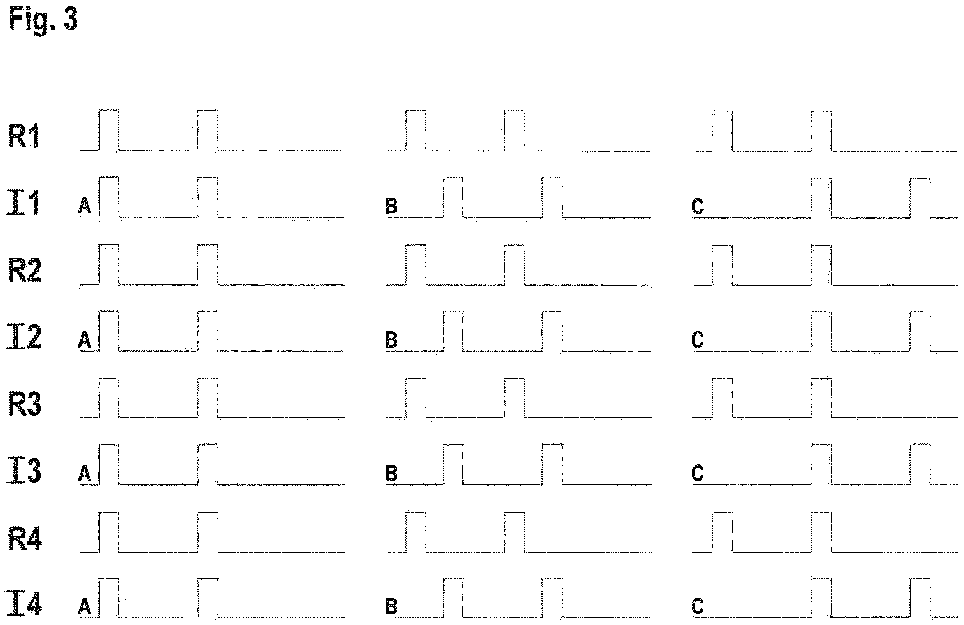

Figur 3 zeigt ein erstes Ausführungsbeispiel einer Informationsübertragung für den Lichtvorhang 1 gemäß Figur 1. Dabei zeigt Figur 3 drei unterschiedliche Konfigurationen, die unterschiedlichen Informationszuständen entsprechen, die durch von den Sendern 4 des Lichtvorhangs 1 gemäß Figur 1 innerhalb eines Zyklus emittierten Lichtimpulsen definiert sind.

Wie in Figur 3 dargestellt, bilden die Lichtstrahlen 3 der ersten, dritten, fünften und siebten Strahlachse Referenzstrahlen R1, R2, R3 und R4. Die Lichtstrahlen 3 der zweiten, vierten, sechsten und achten Strahlachse bilden Informationsstrahlen I1, I2, I3, I4, die zur Informationsübertragung genutzt werden.

Die Sender 4 aller Strahlachsen emittieren während eines Aktivierungsintervalls, in denen diese aktiviert sind, zwei Lichtimpulse, die durch eine Pause getrennt sind. Die beiden Lichtimpulse und die Pause zwischen den beiden Lichtimpulsen sind für alle Strahlachsen gleich.

Die Sendezeitpunkte innerhalb eines Aktivierungsintervalls sind für alle Referenzstrahlen R1 bis R4 gleich. Diese Referenzstrahlen dienen zur Referenzierung des jeweils folgenden Informationsstrahls I1 bis I4.

Bei der Konfiguration A weisen alle Informationsstrahlen I1 bis I4 dieselben Sendezeitpunkte für die Lichtimpulse wie die Referenzstrahlen R1 bis R4 auf, was einem ersten Informationszustand entspricht, der über die Informationsstrahlen I1 bis I4 übertragen wird.

Bei der Konfiguration B sind die Sendezeitpunkte der Lichtimpulse der Informationsstrahlen I1 bis I4 um ein erstes Zeitintervall gegenüber den Sendezeitpunkten der Lichtimpulse der Referenzstrahlen R1 bis R4 versetzt, was einem zweiten Informationszustand entspricht.

Bei der Konfiguration C sind die Sendezeitpunkte der Lichtimpulse der Informationsstrahlen I1 bis I4 um ein zweites Zeitintervall, das größer als das zweite Zeitintervall ist, gegenüber den Sendezeitpunkten der Lichtimpulse der Referenzstrahlen R1 bis R4 versetzt, was einem dritten Informationszustand entspricht.

Somit können mit den Konfigurationen A, B, C drei Informationszustände übertragen werden, wodurch drei unterschiedliche Betriebsarten eingestellt werden können.

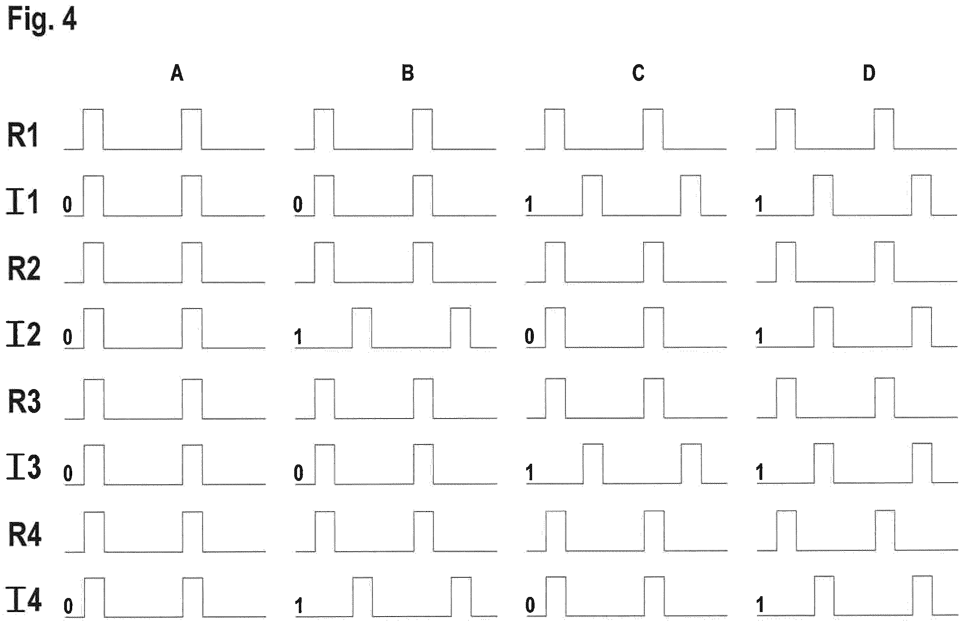

Figur 4 zeigt eine Variante der Ausführungsform gemäß Figur 3. In diesem Fall sind die Lichtimpulse der Informationsstrahlen I1, I2, I3, oder I4 entweder nicht versetzt oder um jeweils dasselbe Zeitintervall versetzt zu den Lichtimpulsen der Referenzstrahlen R1, R2, R3 oder R4. Dadurch werden Bitwerte kodiert. Mit Lichtimpulsen eines Informationsstrahls I1 bis I4, die nicht versetzt zu den Lichtimpulsen der Referenzstrahlen R1 bis R4 sind, wird der Bitwert 0 kodiert, während Lichtimpulse der Informationsstrahlen, die versetzt zu den Lichtimpulsen der Referenzstrahlen R1 bis R4 sind, den Bitwert 1 kodieren.

Somit kann innerhalb eines Zyklus (Scans) der Lichtvorhang 1 wahlweise die Konfiguration A, B, C oder D mit einer entsprechenden Bitfolge übertragen, wodurch jeweils ein Informationszustand übertragen wird, mit einer Betriebsarteinstellung vorgenommen wird.

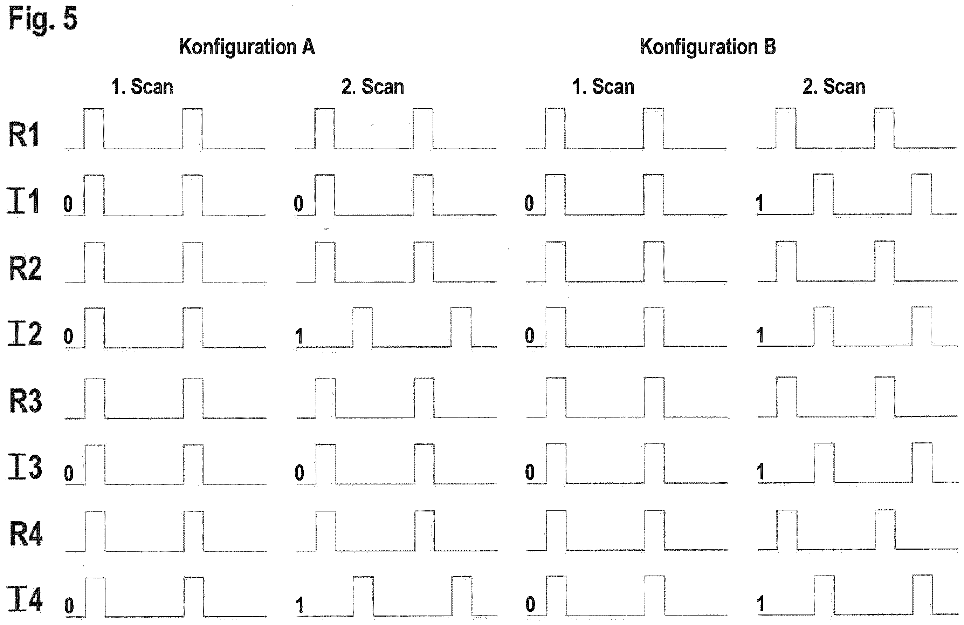

Figur 5 zeigt eine Variante der Ausführungsform gemäß Figur 4. Die Ausführungsform der Figur 5 unterscheidet sich zu der Ausführungsform der Figur 4 dadurch, dass während eines ersten Scans (Zyklus) und auch während eines unmittelbar darauffolgenden zweiten Scans über die Informationsstrahlen I1 bis I4 jeweils eine Bitfolge gesendet wird, wobei sich die Bitfolge beider Scans zu einem Informationszustand (Konfiguration A oder B), der zur Einstellung einer Betriebsart dient, ergänzen.

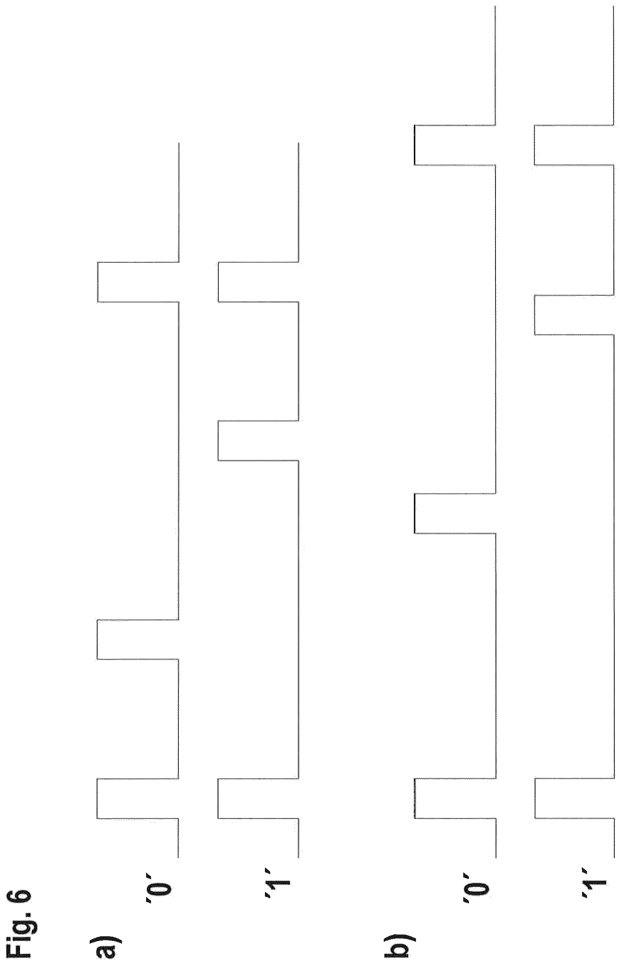

Figur 6a zeigt ein weiteres Beispiel einer Pulsfolge von Lichtimpulsen einer Strahlachse des Lichtvorhangs 1 gemäß Figur 1. Der Sender 4 der Strahlachse emittiert innerhalb eines Aktivierungsintervalls drei Lichtimpulse, die identische Pulsbreiten aufweisen. Durch eine unterschiedliche Lage des zweiten Lichtimpulses zwischen dem ersten und dritten Lichtimpuls wird entweder der Bitwert 0 (oberes Zeitdiagramm) oder der Bitwert 1 (unteres Zeitdiagramm) kodiert.

Figur 6b zeigt die Pulsfolgen des Sensors einer Strahlachse eines benachbarten zweiten Lichtvorhangs 1, dessen Sendelicht als Störlicht in den ersten Lichtvorhang 1 gelangen kann.

Auch bei dem zweiten Lichtvorhang 1 emittiert der Sender 4 pro Aktivierungsintervall drei Lichtimpulse, mit denen entsprechend der Ausführung gemäß Figur 6a der Bitwert 0 oder der Bitwert 1 kodiert ist. Da die Pausen zwischen den Lichtimpulsen bei dem Sender 4 des zweiten Lichtvorhangs 1 erheblich größer als bei dem ersten Lichtvorhang 1 sind, führt eine Störeinstrahlung des zweiten Lichtvorhangs 1 in den ersten Lichtvorhang 1 nicht zu einem vollständigen Informationsverlust im ersten Lichtvorhang 1, da dort die Folgen der Lichtimpulse oder Teile davon gemäß Figur 6a noch erkannt werden können.

### B ezugszei chenli ste

- (1): Lichtvorhang
- (2a, b): Gehäuse
- (3): Lichtstrahl
- (4): Sender
- (5): Sendeoptik
- (6): Empfänger
- (6a): Empfangssignal
- (7): Empfangsoptik
- (8): Sendersteuerung
- (9): Auswerteeinheit

## Patentansprüche

1. Lichtvorhang (1) zur Erfassung von Objekten in einem Überwachungsbereich mit einer Sendereinheit umfassend eine Anordnung von Lichtstrahlen (3) emittierenden Sendern (4) und mit einer Empfängereinheit umfassend eine Anordnung von Lichtstrahlen (3) empfangenden Empfängern (6), wobei jeweils ein Sender (4) mit einem zugeordneten Empfänger (6) ein Sender-Empfänger-Paar bildet, wobei bei freiem Überwachungsbereich die Lichtstrahlen (3) jedes Senders (4) ungehindert auf den zugeordneten Empfänger (6) treffen, und wobei bei einem Objekteingriff im Überwachungsbereich die Lichtstrahlen (3) wenigstens eines Senders (4) unterbrochen sind, und mit einer Auswerteeinheit (9), in welcher in Abhängigkeit von Empfangssignalen (6a) der Empfänger (6) ein Objektfeststellungssignal generiert wird, **dadurch gekennzeichnet, dass** der Lichtstrahl (3) wenigstens eines Senders (4) einen Informationsstrahl bildet, mittels dessen wenigstens eine Information in Form einer Kodierung an den zugeordneten Empfänger (6) übertragen wird, wodurch eine Funktionsänderung in der Empfängereinheit bewirkt wird.

2. Lichtvorhang (1) nach Anspruch 1, **dadurch gekennzeichnet, dass** der Sender (4), über dessen Lichtstrahl (3) die Information übertragen wird, frei wählbar ist.

3. Lichtvorhang (1) nach einem der Ansprüche 1 oder 2, **dadurch gekennzeichnet, dass** mehrere Sender (4), über deren Lichtstrahlen (3) Informationen übertragen werden, vorgesehen sind.

4. Lichtvorhang (1) nach einem der Ansprüche 1 bis 3, **dadurch gekennzeichnet, dass** über die Lichtstrahlen (3) eines Senders (4) mehrere Informationen übertragen werden.

5. Lichtvorhang (1) nach einem der Ansprüche 1 bis 4, **dadurch gekennzeichnet, dass** die Sender-Empfänger-Paare zyklisch einzeln nacheinander aktiviert werden.

6. Lichtvorhang (1) nach einem der Ansprüche 1 bis 5, **dadurch gekennzeichnet, dass** Informationen über Lichtstrahlen (3) zyklisch übertragen werden.

7. Lichtvorhang (1) nach einem der Ansprüche 5 oder 6, **dadurch gekennzeichnet, dass** eine oder mehrere Informationen innerhalb mehrerer aufeinanderfolgenden Zyklen übertragen werden.

8. Lichtvorhang (1) nach einem der Ansprüche 1 bis 7, **dadurch gekennzeichnet, dass** dessen Sender (4) und Empfänger (6) optisch synchronisiert sind.

9. Lichtvorhang (1) nach Anspruch 8, **dadurch gekennzeichnet, dass** die optische Synchronisation anhand eines Synchronisationsstrahls erfolgt, wobei der Synchronisationsstrahl von einem Lichtstrahl (3) gebildet ist.

10. Lichtvorhang (1) nach Anspruch 9, **dadurch gekennzeichnet, dass** mehrere Synchronisationsstrahlen vorhanden sind, die jeweils von einem Lichtstrahl (3) gebildet sind, wobei wahlweise einer der Synchronisationsstrahlen zur Synchronisation der Sender (4) und Empfänger (6) herangezogen wird.

11. Lichtvorhang (1) nach einem der Ansprüche 9 oder 10, **dadurch gekennzeichnet, dass** mittels eines Synchronisationsstrahls Informationen übertragbar sind.

12. Lichtvorhang (1) nach einem der Ansprüche 1 bis 11, **dadurch gekennzeichnet, dass** dessen Sender (4) Lichtstrahlen (3) in Form von Lichtimpulsen emittieren.

13. Lichtvorhang (1) nach Anspruch 12, **dadurch gekennzeichnet, dass** eine Information mit dem Lichtstrahl (3) dadurch übertragen wird, dass die Anzahl von Lichtimpulsen und/oder eine Pulsdauer eines Lichtimpulses und/oder eine Pause zwischen Lichtimpulsen variiert wird.

14. Lichtvorhang (1) nach einem der Ansprüche 1 bis 13, **dadurch gekennzeichnet, dass** ein Lichtstrahl (3) einen Referenzstrahl bildet und dass auf den Referenzstrahl ein Informationsstrahl folgt, wobei der Informationsstrahl auf den Referenzstrahl referenziert ist.

15. Lichtvorhang (1) nach Anspruch 14, **dadurch gekennzeichnet, dass** die Information über einen Informationsstrahl dadurch übertragen wird, dass Sendezeitpunkte von Lichtimpulsen moduliert sind.

16. Lichtvorhang (1) nach einem der Ansprüche 14 oder 15, **dadurch gekennzeichnet, dass** ein Sender (4) einen Informationsstrahl aussendet, bei welchem eine Einteilung in mehrere Zeitzonen, innerhalb der Lichtimpulse emittiert werden, vorliegt.

17. Lichtvorhang (1) nach einem der Ansprüche 1 bis 16, **dadurch gekennzeichnet, dass** ein Sender (4) einen Informationsstrahl aussendet, der eine Kodierung einer Information in Form einer Folge von Lichtimpulsen aussendet, wobei diese Folge eine zeitliche Lücke aufweist, die an den Sendebetrieb eines weiteren Lichtvorhangs (1) angepasst ist.

18. Lichtvorhang (1) nach einem der Ansprüche 4 bis 17, **dadurch gekennzeichnet, dass** mittels eines Informationsstrahls eine Information in Form einer Kodierung übertragen wird und zusätzlich eine andere Information in unkodierter Form oder mit einer anderen Kodierung übertragen wird.

19. Lichtvorhang (1) nach einem der Ansprüche 1 bis 18, **dadurch gekennzeichnet, dass** mittels der wenigstens einen Information, die über einen Informationsstrahl an einen Empfänger (6) gesendet wird, eine Betriebsart in der Empfängereinheit übernommen wird.

20. Lichtvorhang (1) nach Anspruch 19, **dadurch gekennzeichnet, dass** diese Sendereinheit Einstellmittel aufweist, durch deren Betätigung eine Betriebsart vorgebbar ist, und dass die vorgegebene Betriebsart über den Informationsstrahl an die Empfängereinheit übermittelt wird.

21. Lichtvorhang (1) nach Anspruch 20, **dadurch gekennzeichnet, dass** mittels der Einstellmittel eine Verpolung der Betriebsspannung des Lichtvorhangs (1) durchführbar ist oder die Beschaltung eines Anschlusssteckers änderbar ist.

22. Lichtvorhang (1) nach Anspruch 20, **dadurch gekennzeichnet, dass** das Einstellmittel von einem externen Gerät gebildet ist, das über eine Schnittstelle an den Lichtvorhang (1) anschließbar ist.

23. Lichtvorhang (1) nach einem der Ansprüche 19 bis 22, **dadurch gekennzeichnet, dass** eine Betriebsart während des Betriebs des Lichtvorhangs (1) oder nur nach dem Einschalten des Lichtvorhangs (1) einstellbar ist.

24. Lichtvorhang (1) nach einem der Ansprüche 19 bis 23, **dadurch gekennzeichnet, dass** die Art und/oder Anzahl von Betriebsartwechseln limitiert ist.

25. Lichtvorhang (1) nach einem der Ansprüche 19 bis 24, **dadurch gekennzeichnet, dass** an der Empfängereinheit Einstellmittel für Betriebsarten vorgesehen sind.

26. Lichtvorhang (1) nach einem der Ansprüche 19 bis 25, **dadurch gekennzeichnet, dass** als Betriebsart eine erhöhte Unempfindlichkeit gegen Störungen vorgebbar ist.

27. Lichtvorhang (1) nach einem der Ansprüche 19 bis 26, **dadurch gekennzeichnet, dass** als Betriebsart eine Logik-Funktion vorgebbar ist.

28. Lichtvorhang (1) nach einem der Ansprüche 19 bis 27, **dadurch gekennzeichnet, dass** als Betriebsart eine Ein-/Ausgabe-Funktion vorgebbar ist.

29. Lichtvorhang (1) nach einem der Ansprüche 19 bis 28, **dadurch gekennzeichnet, dass** eine Betriebsart ein Gerätezustand oder ein Fehlerzustand ist.

30. Lichtvorhang (1) nach einem der Ansprüche 19 - 29, **dadurch gekennzeichnet, dass** Strahlcharakteristiken eines Lichtstrahls (3) einen Übertragungskanal definieren, dass die Auswahl des Übertragungskanals selbst die Information ist, und dass der Empfänger (6) anhand des Zeitverhaltens und Musters der empfangenen Lichtpulse den im Sender (4) eingestellten Übertragungskanal übernimmt.

31. Lichtvorhang (1) nach einem der Ansprüche 1 bis 29, **dadurch gekennzeichnet, dass** dieser ein Sicherheitssensor ist.

## Geänderte Patentansprüche

### Geänderte Patentansprüche gemäss Regel 137(2) EPÜ.

1. Lichtvorhang (1) zur Erfassung von Objekten in einem Überwachungsbereich mit einer Sendereinheit umfassend eine Anordnung von Lichtstrahlen (3) emittierenden Sendern (4) und mit einer Empfängereinheit umfassend eine Anordnung von Lichtstrahlen (3) empfangenden Empfängern (6), wobei jeweils ein Sender (4) mit einem zugeordneten Empfänger (6) ein Sender-Empfänger-Paar bildet, wobei bei freiem Überwachungsbereich die Lichtstrahlen (3) jedes Senders (4) ungehindert auf den zugeordneten Empfänger (6) treffen, und wobei bei einem Objekteingriff im Überwachungsbereich die Lichtstrahlen (3) wenigstens eines Senders (4) unterbrochen sind, und mit einer Auswerteeinheit (9), in welcher in Abhängigkeit von Empfangssignalen (6a) der Empfänger (6) ein Objektfeststellungssignal generiert wird, **dadurch gekennzeichnet, dass** in der Sendereinheit bedarfsweise und situationsbedingt frei vorgegeben wird, welcher Sender für eine Informationsübertragung genutzt wird, so dass der Lichtstrahl (3) wenigstens eines Senders (4) einen Informationsstrahl bildet, mittels dessen wenigstens eine Information wahlweise in Form einer Kodierung oder in unkodierter Form an den zugeordneten Empfänger (6) übertragen wird, wodurch eine Funktionsänderung in der Empfängereinheit bewirkt wird.

2. Lichtvorhang (1) nach Anspruch 1, **dadurch gekennzeichnet, dass** der Sender (4), über dessen Lichtstrahl (3) die Information übertragen wird, frei wählbar ist.

3. Lichtvorhang (1) nach einem der Ansprüche 1 oder 2, **dadurch gekennzeichnet, dass** mehrere Sender (4), über deren Lichtstrahlen (3) Informationen übertragen werden, vorgesehen sind.

4. Lichtvorhang (1) nach einem der Ansprüche 1 bis 3, **dadurch gekennzeichnet, dass** über die Lichtstrahlen (3) eines Senders (4) mehrere Informationen übertragen werden.

5. Lichtvorhang (1) nach einem der Ansprüche 1 bis 4, **dadurch gekennzeichnet, dass** die Sender-Empfänger-Paare zyklisch einzeln nacheinander aktiviert werden.

6. Lichtvorhang (1) nach einem der Ansprüche 1 bis 5, **dadurch gekennzeichnet, dass** Informationen über Lichtstrahlen (3) zyklisch übertragen werden.

7. Lichtvorhang (1) nach einem der Ansprüche 5 oder 6, **dadurch gekennzeichnet, dass** eine oder mehrere Informationen innerhalb mehrerer aufeinanderfolgenden Zyklen übertragen werden.

8. Lichtvorhang (1) nach einem der Ansprüche 1 bis 7, **dadurch gekennzeichnet, dass** dessen Sender (4) und Empfänger (6) optisch synchronisiert sind.

9. Lichtvorhang (1) nach Anspruch 8, **dadurch gekennzeichnet, dass** die optische Synchronisation anhand eines Synchronisationsstrahls erfolgt, wobei der Synchronisationsstrahl von einem Lichtstrahl (3) gebildet ist.

10. Lichtvorhang (1) nach Anspruch 9, **dadurch gekennzeichnet, dass** mehrere Synchronisationsstrahlen vorhanden sind, die jeweils von einem Lichtstrahl (3) gebildet sind, wobei wahlweise einer der Synchronisationsstrahlen zur Synchronisation der Sender (4) und Empfänger (6) herangezogen wird.

11. Lichtvorhang (1) nach einem der Ansprüche 9 oder 10, **dadurch gekennzeichnet, dass** mittels eines Synchronisationsstrahls Informationen übertragbar sind.

12. Lichtvorhang (1) nach einem der Ansprüche 1 bis 11, **dadurch gekennzeichnet, dass** dessen Sender (4) Lichtstrahlen (3) in Form von Lichtimpulsen emittieren.

13. Lichtvorhang (1) nach Anspruch 12, **dadurch gekennzeichnet, dass** eine Information mit dem Lichtstrahl (3) dadurch übertragen wird, dass die Anzahl von Lichtimpulsen und/oder eine Pulsdauer eines Lichtimpulses und/oder eine Pause zwischen Lichtimpulsen variiert wird.

14. Lichtvorhang (1) nach einem der Ansprüche 1 bis 13, **dadurch gekennzeichnet, dass** ein Lichtstrahl (3) einen Referenzstrahl bildet und dass auf den Referenzstrahl ein Informationsstrahl folgt, wobei der Informationsstrahl auf den Referenzstrahl referenziert ist.

15. Lichtvorhang (1) nach Anspruch 14, **dadurch gekennzeichnet, dass** die Information über einen Informationsstrahl dadurch übertragen wird, dass Sendezeitpunkte von Lichtimpulsen moduliert sind.

16. Lichtvorhang (1) nach einem der Ansprüche 14 oder 15, **dadurch gekennzeichnet, dass** ein Sender (4) einen Informationsstrahl aussendet, bei welchem eine Einteilung in mehrere Zeitzonen, innerhalb der Lichtimpulse emittiert werden, vorliegt.

17. Lichtvorhang (1) nach einem der Ansprüche 1 bis 16, **dadurch gekennzeichnet, dass** ein Sender (4) einen Informationsstrahl aussendet, der eine Kodierung einer Information in Form einer Folge von Lichtimpulsen aussendet, wobei diese Folge eine zeitliche Lücke aufweist, die an den Sendebetrieb eines weiteren Lichtvorhangs (1) angepasst ist.

18. Lichtvorhang (1) nach einem der Ansprüche 4 bis 17, **dadurch gekennzeichnet, dass** mittels eines Informationsstrahls eine Information in Form einer Kodierung übertragen wird und zusätzlich eine andere Information in unkodierter Form oder mit einer anderen Kodierung übertragen wird.

19. Lichtvorhang (1) nach einem der Ansprüche 1 bis 18, **dadurch gekennzeichnet, dass** mittels der wenigstens einen Information, die über einen Informationsstrahl an einen Empfänger (6) gesendet wird, eine Betriebsart in der Empfängereinheit übernommen wird.

20. Lichtvorhang (1) nach Anspruch 19, **dadurch gekennzeichnet, dass** diese Sendereinheit Einstellmittel aufweist, durch deren Betätigung eine Betriebsart vorgebbar ist, und dass die vorgegebene Betriebsart über den Informationsstrahl an die Empfängereinheit übermittelt wird.

21. Lichtvorhang (1) nach Anspruch 20, **dadurch gekennzeichnet, dass** mittels der Einstellmittel eine Verpolung der Betriebsspannung des Lichtvorhangs (1) durchführbar ist oder die Beschaltung eines Anschlusssteckers änderbar ist.

22. Lichtvorhang (1) nach Anspruch 20, **dadurch gekennzeichnet, dass** das Einstellmittel von einem externen Gerät gebildet ist, das über eine Schnittstelle an den Lichtvorhang (1) anschließbar ist.

23. Lichtvorhang (1) nach einem der Ansprüche 19 bis 22, **dadurch gekennzeichnet, dass** eine Betriebsart während des Betriebs des Lichtvorhangs (1) oder nur nach dem Einschalten des Lichtvorhangs (1) einstellbar ist.

24. Lichtvorhang (1) nach einem der Ansprüche 19 bis 23, **dadurch gekennzeichnet, dass** die Art und/oder Anzahl von Betriebsartwechseln limitiert ist.

25. Lichtvorhang (1) nach einem der Ansprüche 19 bis 24, **dadurch gekennzeichnet, dass** an der Empfängereinheit Einstellmittel für Betriebsarten vorgesehen sind.

26. Lichtvorhang (1) nach einem der Ansprüche 19 bis 25, **dadurch gekennzeichnet, dass** als Betriebsart eine erhöhte Unempfindlichkeit gegen Störungen vorgebbar ist.

27. Lichtvorhang (1) nach einem der Ansprüche 19 bis 26, **dadurch gekennzeichnet, dass** als Betriebsart eine Logik-Funktion vorgebbar ist.

28. Lichtvorhang (1) nach einem der Ansprüche 19 bis 27, **dadurch gekennzeichnet, dass** als Betriebsart eine Ein-/Ausgabe-Funktion vorgebbar ist.

29. Lichtvorhang (1) nach einem der Ansprüche 19 bis 28, **dadurch gekennzeichnet, dass** eine Betriebsart ein Gerätezustand oder ein Fehlerzustand ist.

30. Lichtvorhang (1) nach einem der Ansprüche 19 - 29, **dadurch gekennzeichnet, dass** Strahlcharakteristiken eines Lichtstrahls (3) einen Übertragungskanal definieren, dass die Auswahl des Übertragungskanals selbst die Information ist, und dass der Empfänger (6) anhand des Zeitverhaltens und Musters der empfangenen Lichtpulse den im Sender (4) eingestellten Übertragungskanal übernimmt.

31. Lichtvorhang (1) nach einem der Ansprüche 1 bis 29, **dadurch gekennzeichnet, dass** dieser ein Sicherheitssensor ist.
